# FASCICULE DE BREVET EUROPEEN

(11) **EP 1 410 997 B1**
(45) Date de publication et mention de la délivrance du brevet: **08.03.2006**
(21) Numéro de dépôt: 03292528.1
(22) Date de dépôt: 13.10.2003
(51) Int. Cl.: B65D 25/20, A01G 9/02, B65D 6/10

(54) **Récipient en matière moulable muni d'une extrémité comportant une paroi multiple et son procédé de fabrication**
Gegossene Behälter mit mehrwandigem Rand und Verfahren zu seiner Herstellung
Molded container with a multi-walled edge and method for manufacturing same

(30) Priorité: 14.10.2002 FR 0212757
(43) Date de publication de la demande: 21.04.2004
(73) Titulaire: Millet Marius, 39170 Pratz (FR)
(72) Inventeur: Defferrard, Jean-Marie, 39170 Pratz (FR); Duquet, Hervé, 39200 Saint Claude (FR); Millet, Christine, 39170 Saint Lupicini (FR)
(74) Mandataire: Roger-Petit, Georges

(56) Documents cités:
- EP-A- 0 733 462
- US-A- 3 247 302
- US-B1- 6 170 144

## Description

L'invention concerne un récipient en matière moulable muni d'une extrémité comportant une paroi multiple.

Elle s'applique plus particulièrement à un pot comportant une paroi latérale, un fond et une ouverture, que l'on appellera ci-après de façon arbitraire supérieure. La paroi multiple précitée constitue la partie supérieure de la paroi latérale.

Elle trouve une application particulière, bien que non exhaustive, dans le domaine de fabrication de pots de fleurs ou analogues, comportant une zone supérieure de paroi latérale dont la configuration est telle qu'elle permet de présenter un aspect double paroi.

Pour fixer les idées, on se placera dans ce qui suit, sans en limiter en quoi que ce soit sa portée, dans le cas de cette application préférée de l'invention.

L'obtention d'un aspect "double paroi" peut être obtenue par la disposition d'une collerette sur une zone supérieure de la paroi latérale.

Dans l'art connu, il a été proposé un dispositif comprenant une collerette repliée grâce à un système d'un ou plusieurs organes formant "chamières". Ce dernier dispositif est décrit dans le brevet français FR 2 812 . 582, au nom de la Demanderesse. Ce dispositif est relativement complexe.

Il a également été proposé de disposer une collerette à l'intérieur du pot.

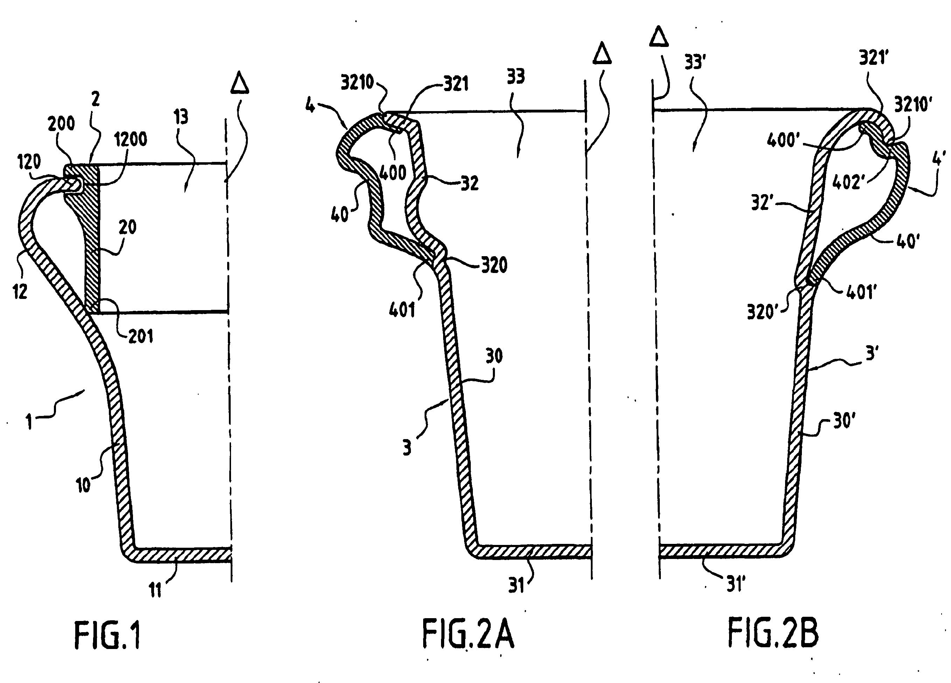

A titre d'exemple non exhaustif, la figure 1 annexée à la présente description illustre ce mode de réalisation conforme à l'art connu.

La figure 1 illustre un pot 1 en coupe longitudinale partielle (demi-pot). On a supposé que le pot 1 présente une symétrie autour d'un axe Δ, que l'on appellera ci-après vertical. Le pot 1 comporte un fond 11, éventuellement percé d'un orifice central (non représenté), et une paroi latérale 10, sensiblement verticale, qui se prolonge par une zone doublement incurvée, d'abord divergente (zone 12) puis qui se replie vers l'intérieur du pot (zone 120).

La collerette 2 formant double paroi présente également une symétrie verticale d'axe Δ. Celle-ci est constituée d'une paroi verticale 20 munie d'une gorge annulaire 200. Les dimensions de cette gorge sont telles qu'elles permettent l'insertion de l'extrémité 1200 de la paroi supérieure recourbée 12, plus précisément de l'extrémité de la zone 120.

La collerette 2 est tout d'abord introduite à l'intérieure du pot 1 par l'ouverture supérieure 13. Par effet élastique, le bord 1200 de la zone 120 s'écarte puis pénètre dans la rainure annulaire 200 précitée.

La hauteur de la collerette 2 est déterminée de manière à ce que l'extrémité inférieure 201 de la paroi latérale 20 s'appuie sur la face interne de la paroi latérale du pot 1, plus précisément dans la zone divergente 12.

Cette disposition permet effectivement d'obtenir un effet double paroi dans la région supérieure du pot 1.

Le pot 1 et la collerette 2 sont réalisés habituellement en matériau plastique.

Cependant, le pot 1 (et sa collerette 2) et le procédé de fabrication ne sont pas exempt d'inconvénients.

En effet, la configuration qui vient d'être décrite exige des épaisseurs de parois de pot importantes, et corrélativement une quantité de matière importante, ce pour obtenir une bonne résistance mécanique. Il s'ensuit que le procédé de fabrication est peu économique.

D'autre part, un des procédés les plus utilisé pour la fabrication de pots est le procédé dit de "soufflage".

Or un pot 1 et sa collerette 2, dans la configuration qui vient d'être décrite en regard de la figure 1, ne peuvent que très difficilement être tous deux obtenus par soufflage, ce compte tenu de la précision propre à ce procédé.

L'invention vise à pallier les inconvénients des dispositifs et procédés de l'art connu, et dont certains viennent d'être rappelés.

L'invention se fixe pour but un récipient dont la partie supérieure de la paroi latérale présente un aspect "paroi multiple", notamment "double paroi".

Pour ce faire, selon une première caractéristique importante, la paroi latérale est munie d'une rainure périphérique. Dans un mode de réalisation préféré, cette rainure est une rainure annulaire circulaire, le récipient étant supposé de symétrie circulaire, cependant il va de soi que le pot et la collerette peuvent prendre toutes formes appropriées : sections carrée, rectangulaire, ellipsoïdale, etc.

Selon une autre caractéristique importante, l'extrémité de la paroi latérale du récipient (côté ouverture de chargement) présente un rebord courbé vers l'extérieur.

Selon une troisième caractéristique importante encore, une collerette de forme prédéterminée est enfilée autour du récipient. Les dimensions de cette collerette sont telles qu'elle peut s'encliqueter (clipsage) entre, d'une part, la rainure périphérique formée dans la paroi latérale, et, d'autre part, le rebord du pot. L'encliquetage est rendu possible en choisissant des matériaux à propriétés élastiques, telles que des matières plastiques.

De façon préférentielle, la collerette précitée est dotée d'une forme annulaire galbée, permettant, à la fois, de conférer à la région supérieure du récipient l'aspect double paroi recherchée, ainsi que tout aspect esthétique prédéterminé.

De façon plus précise, l'extrémité basse de la paroi de la collerette est insérée dans la rainure précitée et l'extrémité haute est introduite à force sous le rebord du pot.

L'invention est susceptible de plusieurs mode de réalisation, notamment en ce qui concerne l'encliquetage sous le rebord et les configurations respectives des extrémités de paroi de collerette et de rebord de pot.

L'invention a donc pour objet principal un récipient en matériau à propriétés élastiques, notamment un pot de fleur ou similaire, ayant au moins une paroi latérale, un fond et une ouverture dite de chargement, ladite paroi comportant une région présentant un aspect dit paroi multiple, caractérisé en ce que ladite paroi du récipient comporte une rainure périphérique et se prolonge par une zone formant rebord de ladite ouverture de chargement, courbée vers l'extérieur du pot, en ce qu'il est prévu au moins une collerette périphérique externe, en matériau à propriétés élastiques, comportant une paroi de galbe prédéterminé destinée à être enfilée autour de ladite paroi de récipient, et en ce que les dimensions de ladite paroi de collerette sont telles qu'elles permettent, par effet élastique, son encliquetage à force entre ladite rainure périphérique, par une première extrémité, dite basse, et ledit rebord, par une seconde extrémité, dite haute, de manière à réaliser ledit effet de paroi multiple dans une zone supérieure dudit récipient proche de ladite ouverture de chargement.

L'invention a encore pour objet un procédé de fabrication d'un tel récipient.

L'invention s'applique notamment à la fabrication de pots de fleurs ou similaires.

L'invention va maintenant être décrite de façon plus détaillée en se référant aux dessins annexés, parmi lesquels :
- la figure 1 illustre schématiquement un exemple de réalisation d'un récipient présentant un aspect double paroi selon l'art connu ;
- la figure 2A illustre schématiquement, en coupe partielle, un récipient présentant un aspect double paroi selon un premier mode de réalisation de l'invention ; et
- la figure 2B illustre un récipient, en coupe partielle, présentant un aspect double paroi selon un deuxième mode de réalisation de l'invention.

Dans ce qui suit, sans en limiter en quoi que ce soit la portée, on se placera ci-après dans le cadre de l'application préférée de l'invention, sauf mention contraire, c'est-à-dire dans le cas de pots de fleurs ou analogues, comportant une zone supérieure de paroi latérale dont la configuration est telle qu'elle permet de présenter un aspect double paroi, ce par référence aux figures 2A et 2B.

La figure 2A illustre un exemple de réalisation, en coupe partielle, selon un premier mode de réalisation, d'un pot de fleur 3, présentant un aspect double paroi, dans ce qui sera appelé, de façon arbitraire, une zone supérieure, c'est-à-dire une zone proche de son ouverture de chargement 33.

On suppose que le pot 3, dans un mode de réalisation préféré, présente une symétrie circulaire autour d'un axe, que l'on supposera arbitrairement vertical Δ.

Le pot 3 comporte un fond 31 (éventuellement muni d'une ouverture centrale non représentée), une paroi latérale 30, sensiblement verticale dans une zone inférieure (couvrant la plus grand partie de la paroi totale du pot 3), qui se prolonge par une zone 32 présentant un galbe prédéterminée et se terminant par un rebord 321, courbé vers l'extérieur du pot 3, sensiblement parallèle à un plan dans lequel est inscrite l'ouverture 33.

A l'exception de cette dernière zone, 321, le pot 3 présente une configuration sensiblement similaire à celle du pot 1 selon l'art connu.

Selon une première caractéristique du pot 3 selon l'invention, la paroi 30 est munie d'une rainure périphérique 320, *a priori* annulaire circulaire, puisque le pot 3 est supposé présenter une symétrie circulaire d'axe Δ. Cependant, comme il a été indiqué, d'autre formes de pots peuvent être adoptées : carrée, rectangulaire, etc.

De même, dans le cadre de l'invention, le mot "rainure" doit être pris dans son sens le plus général : il peut s'agir notamment d'une rainure proprement dite, mais aussi d'une aspérité du décor (galbe de la paroi 30 du pot 3).

Pour obtenir l'aspect « double paroi » recherché, une collerette 4 est réalisée dans un matériau identique ou similaire à celui du pot 3. Le profil de la paroi 40 de la collerette peut être quelconque pour présenter une forme esthétique voulue.

Par contre, les dimensions de la collerette 4, notamment les diamètres intérieurs des extrémités inférieure 401 et supérieure 400 de la paroi 40, sont telles que celle-ci peut être enfilée sur le pot 3, autour de la paroi 30 (plus précisément de la région 32), et s'encliqueter sur la rainure 320, par son extrémité inférieure 401, et rester coincée sous l'extrémité périphérique 3210 du rebord 321, par son extrémité supérieure 3210. Cette dernière peut être dotée avantageusement d'un profil prédéterminé : par exemple, un méplat périphérique en forme de "L", dual du profil de l'extrémité 3210 du rebord 321, pour obtenir un emboîtage des deux extrémités de meilleure qualité.

La figure 2B illustre un exemple de réalisation, en coupe partielle, selon un deuxième mode de réalisation, d'un pot de fleur, désormais référencé 3', présentant également un aspect "double paroi".

De même les éléments communs avec ceux de la figure 2A portent les mêmes numéros de référence, mais avec le signe prime, et ne seront re-décrits qu'en tant que de besoin.

La différence principale entre les modes de réalisation des figures 2A et 2B tient principalement au fait que le rebord 321' du pot 3' est incurvé vers le bas. La zone d'extrémité supérieure 3210' de la paroi 40' de la collerette 4' est conformée de telle sorte que son profil externe soit sensiblement dual du profil interne du rebord 321'. Il comporte, dans l'exemple décrit, un repli en creux 402' dans lequel est insérée, après encliquetage, l'extrémité 3210' du rebord 321 _

L'encliquetage "bas" (c'est-à-dire entre l'extrémité basse 401' de la paroi 40' de la collerette 4' et la rainure 320') peut être réalisée à une hauteur quelconque sur la paroi 30' du pot 3', notamment dans une zone haute, comme illustré sur la figure 2B, ou dans une zone proche du fond 31' du pot 3'.

Dans les deux modes de réalisation, la résistance mécanique de l'ensemble est obtenue par le pot lui-même, 3 ou 3'. La fonction principale de la collerette, 4 ou 4', est une fonction "décor" qui procure, en outre, l'aspect "double paroi" recherché. Les parois, 40 ou 40', n'ont pas besoin d'être épaisses, car la collerette n'est que difficilement enlevable, par le dessus ou par le dessous, car elle est encliquetée à force par effet élastique. La quantité de matière nécessaire est donc corrélativement peu importante.

Il s'ensuit que, pour fabriquer les deux éléments conformes à l'invention, pot, 3 ou 3', et collerette, 4 ou 4', on peut utiliser un moule unique.

On peut mettre en oeuvre indifféremment un procédé de soufflage ou d'injection de matière plastique, telle que du propylène, du polyéthylène, etc.

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 2A et 2B.

Il est notamment possible, sans sortir du cadre de l'invention, dans un mode de réalisation non explicitement décrit, de prévoir une paroi multiple et non plus simplement double. Pour ce faire, on peut prévoir, par exemple, des rainures périphériques intermédiaires dans la paroi du récipient et y encliqueter une ou plusieurs collerettes de renfort, sous la collerette principale servant de décor.

La forme du pot, et de la collerette associée donnant l'aspect double paroi, peuvent circulaire, comme il a été décrit, mais aussi quelconque : carrée, rectangulaire, etc.

De même, le choix des matériaux procède d'un choix technologique, à la portée de l'Homme de Métier, et ceux-ci n'ont été précisés que pour mieux décrire les caractéristiques techniques du dispositif selon l'invention.

En effet, ceux-ci peuvent similaires, voir identiques à ceux utilisés dans l'art connu. Ceci constitue un avantage supplémentaire de l'invention, du fait de la compatibilité préservée.

## Revendications

1. Récipient en matériau à propriétés élastiques, notamment un pot de fleur ou similaire, ayant au moins une paroi latérale, un fond et une ouverture dite de chargement, ladite paroi comportant une région présentant un aspect dit paroi multiple, **caractérisé en ce que** ladite paroi (30-30') du récipient (3-3') comporte une rainure périphérique (320-320') et se prolonge par une zone formant rebord (321-321') de ladite ouverture de chargement (33-33'), courbée vers l'extérieur du pot (3-3'), **en ce qu'**il est prévu au moins une collerette périphérique externe (4-4'), en matériau à propriétés élastiques, comportant une paroi (40-40') de galbe prédéterminé destinée à être enfilée autour de ladite paroi (30-30') de récipient (3-3'), et **en ce que** les dimensions de ladite paroi (40-40') de collerette (4-4') sont telles qu'elles permettent, par effet élastique, son encliquetage à force entre ladite rainure périphérique (320-320**'**) par une première extrémité (401-401'), dite basse, et ledit rebord (321-321'), par une seconde extrémité (400-400'), dite haute, de manière à réaliser ledit effet de paroi multiple dans une zone supérieure dudit récipient (3-3') proche de ladite ouverture de chargement (33-33').

2. Récipient selon la revendication 1, **caractérisé en ce que** la dite ouverture de chargement (33) étant inscrite dans un plan, ledit rebord (321) est sensiblement parallèle à ce plan et **en ce que** ladite extrémité haute (400) de paroi (40) de collerette (4) est insérée sous ledit rebord (321) pour obtenir ledit encliquetage à force.

3. Récipient selon la revendication 2, **caractérisé en ce que** ladite extrémité haute (400) de ladite paroi (40) de collerette (4) présente une gorge périphérique de profil dual du profil de l'extrémité (3210) dudit rebord (321).

4. Récipient selon la revendication 1, **caractérisé en ce que** ledit rebord (321') comporte une paroi d'un profil déterminé, courbée vers ledit fond de récipient (31'), **en ce que** ladite extrémité haute de paroi (40') de collerette (4') comporte une paroi présentant un profil dual dudit profil déterminé, et **en ce que** ladite paroi de profil dual est insérée, en contact étroit, sous ladite paroi recourbée (321') de profil déterminé, de manière à obtenir ledit encliquetage à force

5. Récipient selon l'une quelconque des revendications précédentes, **caractérisé en ce que** le matériau constituant ledit pot (3-3') et ladite collerette (4-4') est une matière plastique.

6. Procédé de fabrication d'un récipient selon l'une quelconque des revendications 1 à 5, **caractérisé en ce qu'**il comprend une étape de moulage dudit pot (3-3') et de ladite collerette (4-4') par soufflage.

7. Procédé de fabrication d'un récipient selon l'une quelconque des revendications 1 à 5, **caractérisé en ce qu'**il comprend une étape de moulage dudit pot (3-3') et de ladite collerette(4-4') par injection.

8. Procédé selon les revendications 6 ou 7, **caractérisé en ce que** ledit pot (3-3') et de ladite collerette (4-4') sont réalisées à partir d'un moule unique.

## Patentansprüche

1. Behälter aus Material mit elastischen Eigenschaften, insbesondere ein Blumentopf oder dergleichen, mit mindestens einer Seitenwand, einem Boden und einer Einfüllöffnung, wobei die Wand einen Bereich aufweist, der ein mehrwandiges Aussehen besitzt, **dadurch gekennzeichnet, dass** die Wand (30-30') des Behälters (3-3.') eine Umfangseinkerbung (320-320') aufweist und sich-mit einer einen Rand (321-321') der Einfüllöffnung (33-33') bildenden Zone fortsetzt, die zur Außenseite des Topfs (3-3') hin gekrümmt ist, dass mindestens ein äußerer Umfangskragen (4-4'), aus Material mit elastischen Eigenschaften, vorgesehen ist, der eine Wand (40-40') mit vorbestimmtem Umriss aufweist, die dazu bestimmt ist, um die Wand (30-30') des Behälters (3-3') herum angeordnet zu werden, und dass die Abmessungen der Wand (40-40') des Kragens (4-4') derart sind, dass sie, durch elastische Wirkung, ihr Einrasten durch Krafteinwirkung zwischen der Umfangseinkerbung (320-320'), mit einem ersten unteren Ende (401-401') **,** und dem Rand (321-321'), mit einem zweiten oberen Ende (400-400'), erlauben, um die mehrwandige Wirkung in einer oberen Zone des Behälters (3-3') nahe der Einfüllöffnung (33-33') herzuetellen.

2. Behälter nach Anspruch 1, **dadurch gekennzeichnet, dass** wenn die Einfüllöffnung (33) in eine Ebene einbeschrieben ist, der Rand (321) im Wesentlichen parallel zu dieser Ebene ist, und dass das obere Ende (400) der Wand (40) des Kragens (4) unter dem Rand (321) eingefügt wird, um das Einrasten durch Krafteinwirkung zu erhalten.

3. Behälter nach Anspruch 2, **dadurch gekennzeichnet, dass** das obere Ende (400) der Wand (40) des Kragens (4) eine Umfangskehle mit einem mit dem Profil des Endes (3210) des Randes (321) gepaarten Profil aufweist.

4. Behälter nach Anspruch 1, **dadurch gekennzeichnet, dass** der Rand (321') eine Wand mit einem bestimmten Profil aufweist, die in Richtung des Bodens des Behälters (31') gekrümmt ist, dass das obere Ende der Wand (40') des Kragens (4') eine Wand aufweist, die ein mit dem bestimmten Profil gepaartes Profil besitzt, dass die Wand dem mit gepaarten Profil in engem Kontakt unter die gekrümmte Wand (321') mit bestimmtem Profil eingefügt wird, um das Einrasten durch Krafteinwirkung zu erhalten.

5. Behälter nach einem der vorangehenden Ansprüche, **dadurch gekennzeichnet, dass** das Material, aus dem der Topf (3-3') und der Kragen (4-4') besteht, ein Kunststoffmaterial ist.

6. Fertigungsverfahren für einen Behälter nach einem der Ansprüche 1 bis 5, **dadurch gekennzeichnet, dass** es einen Schritt des Formens des Topfs (3-3') und des Kragens (4-4') durch Blasformen umfasst.

7. Fertigungsverfahren für einen Behälter nach einem der Ansprüche 1 bis 5, **dadurch gekennzeichnet, dass** es einen Schritt des Formens des Topfs (3-3') und des Kragens (4-4') durch Spritzgießen umfasst.

8. Verfahren nach einem der Ansprüche 6 oder 7, **dadurch gekennzeichnet, dass** der Topf (3-3') und der Kragen (4-4') aus einer einzigen Form heraus hergestellt werden.

## Claims

1. Container made from material having elastic properties, in particular a flowerpot or the like, having at least one side wall, a base and a filling opening, the said wall comprising a region having a multiwalled aspect, **characterized in that** the said wall (30-30') of the container (3-3') comprises a peripheral groove (320-320') and is extended by a rim-forming area (321-321') of the said filling opening (33-33') which is curved towards the outside of the pot (3-3'), **in that** there is provided at least one external peripheral collar (4-4'), made from material having elastic properties, comprising a wall (40-40') of predetermined curve which is intended to be slipped around the said wall (30-30') of the container (3-3'), and **in that** the dimensions of the said wall (40-40') of the collar (4-4') are such that they allow it, by means of an elastic effect, to be snap-fitted between the said peripheral groove (320-320'), by means of a first, bottom edge (401-401'), and the said rim (321-321'), by means of a second, top edge (400-400'), in such a way as to produce the said multiwalled effect in an upper area of the said container (3-3') which is close to the said filling opening (33-33').

2. Container according to Claim 1, **characterized in that**, with the said filling opening (33) lying in one plane, the said rim (321) is approximately parallel to this plane and **in that** the said top edge (400) of the wall (40) of the collar (4) is inserted beneath the said rim (321) in order to achieve the said snap-fit.

3. Container according to Claim 2, **characterized in that** the said top edge (400) of the said wall (40) of the collar (4) has a peripheral groove with a profile matching the profile of the edge (3210) of the said rim (321).

4. Container according to Claim 1, **characterized in that** the said rim (321') comprises a wall with a specified profile which is curved towards the said container base (31'), **in that** the said top edge of the wall (40') of the collar (4') comprises a wall having a profile matching the said specified profile, and **in that** the said wall of matched profile is inserted, in close contact, beneath the said curved wall (321') of specified profile so as to achieve the said snap-fit.

5. Container according to any one of the preceding claims, **characterized in that** the material from which the said pot (3-3') and the said collar (4-4') are made is a plastic.

6. Process for manufacturing a container according to any one of Claims 1 to 5, **characterized in that** it includes a step of moulding the said pot (3-3') and the said collar (4-4') by blow moulding.

7. Process for manufacturing a container according to any one of Claims 1 to 5, **characterized in that** it includes a step of moulding the said pot (3-3') and the said collar (4-4') by injection moulding.

8. Process according to Claim 6 or 7, **characterized in that** the said pot (3-3') and the said collar (4-4') are produced from a single mould.
